# EUROPÄISCHE PATENTSCHRIFT

(11) **EP 1 698 929 B1**
(45) Veröffentlichungstag und Bekanntmachung des Hinweises auf die Patenterteilung: **30.07.2008**
(21) Anmeldenummer: 06001362.0
(22) Anmeldetag: 23.01.2006
(51) Int. Cl.: G02B 21/06, G02B 21/02, G01N 21/55

(54) **Objektiv und Mikroskop**
Objective and microscope
Objectif et microscope

(30) Priorität: 01.03.2005 DE 102005009832
(43) Veröffentlichungstag der Anmeldung: 06.09.2006
(73) Patentinhaber: Leica Microsystems CMS GmbH, 35578 Wetzlar (DE)
(72) Erfinder: Weiss, Albrecht, Dr., 35440 Linden (DE); Ganser, Michael, Dr., 35398 Giessen (DE)
(74) Vertreter: Naumann, Ulrich

(56) Entgegenhaltungen:
- WO-A-20/05029151
- US-A1- 2002 097 489
- US-A1- 2003 058 530
- US-A1- 2004 174 523
- US-A1- 2004 196 457

## Beschreibung

Die vorliegende Erfindung betrifft ein Mikroskop mit einem Objektiv und einer Lichtquelle zur evaneszenten Beleuchtung einer Probe, wobei das Beleuchtungslicht in der Ebene der Objektivpupille einen Fokus aufweist.

Bei der Totalintemen-Reflexions-Mikroskopie wird das Brechungsverhalten von Licht beim Übergang von einem optisch dichteren in ein optisch dünneres Medium genutzt. So ergibt sich beispielsweise für den Übergang von Deckglas (n1=1,518) zu Wasser (n2=1,33) ein kritischer Winkel von 61 °, der Winkel der Total-Reflexion. Unter den Bedingungen der Total-Reflexion (Winkel ≥61 °) bildet sich im Medium mit geringerem Brechungsindex eine stehende evaneszente Welle. Die Intensität dieser Well fällt exponentiell mit dem Abstand zur Grenzfläche ab. Aufgrund dessen werden von der Grenzfläche weiter entfernte Fluorophore nicht angeregt. Die Hintergrundfluoreszenz wird erheblich reduziert. Der Bildkontrast wird dabei verbessert und die Auflösung wird gleichzeitig deutlich gesteigert. Voraussetzung für die Nutzung des voranstehend geschilderten Phänomens ist ein ausreichend großer Unterschied der Brechungsindizes von Deckglas und Medium.

Aus der US 2002/0097489 A1 ist bereits ein Mikroskop mit evaneszenter Beleuchtung einer Probe bekannt. Das Mikroskop beinhaltet eine Weißlichtquelle, deren Licht über eine Schlitzblende durch das Mikroskopobjektiv hindurch in den eine Probe tragenden Objektträger zur evaneszenten Beleuchtung eingekoppelt wird. Das Beleuchtungslicht pflanzt sich in dem Objektträger durch totalinterne Reflektion fort, wobei die Beleuchtung der Probe nur im Bereich des aus dem Objektträger herausragenden evaneszenten Feldes erfolgt. Mikroskope dieser Art sind unter dem Begriff TIRFM (Total Internal Reflection Fluorescent Microscope) bekannt.

Die z-Auflösung von TIRF-Mikroskopen ist aufgrund des nur ca. 100 nm in die Probe ragenden evaneszenten Feldes außerordentlich gut.

Aus der DE 101 08 796 A1 ist ein hochaperturiges Objektiv, insbesondere für TIRF-Anwendungen, bekannt. Das Objektiv besteht aus einer ersten Linse mit einer positiven Brechkraft, einer zweiten Linse mit negativer Brechkraft, wobei das Brennweitenverhältnis zwischen den beiden Linsen im Bereich von - 0,4 und - 0,1 liegt und die Gesamtbrechkraft größer Null ist. Ferner beinhaltet das Objektiv zwei positive Linsen, deren Verhältnisdurchmesser zur Brennweite größer 0,3 und kleiner 0,6 ist. Ferner beinhaltet das Objektiv eine Negativlinse und einer Sammellinse, wobei die Negativlinse der Frontgruppe zugewandt ist und das Brennweitenverhältnis der Negativlinse und der Sammellinse zwischen - 0,5 und - 2 liegt.

Aus der DE 102 17 098 A1 ist eine Auflichtbeleuchtungsanordnung für die TIRF-Mikroskopie bekannt. Die Auflichtbeleuchtungsanordnung beinhaltet eine Beleuchtungsquelle, die im Betrieb ein polarisiertes Beleuchtungsstrahlenbündel abgibt, das unter einem Winkel zur optischen Achse propagiert und eine Umlenkeinrichtung, die das Beleuchtungsstrahlenbündel umlenkt und parallel zur optischen Achse in das Objektiv einkoppelt. Es ist bei dieser Auflichtbeleuchtungsanordnung vorgesehen, dass das von der Beleuchtungsquelle abgegebene Beleuchtungsstrahlenbündel s- und p-Polahsafionsrichtungen mit einer Phasendifferenz aufweist und die Umlenkeinrichtung das Beleuchtungsstrahlenbündel x-mal reflektiert, wobei x = (n x 180 ° - d)/60 °.

Aus der DE 101 43 481 A1 ist ein Mikroskop zur TIRM (Total Internal Reflection Microscopy) bekannt. Das Mikroskop weist ein Mikroskopgehäuse und ein Objektiv auf. Das von einer Beleuchtungseinrichtung ausgehende Beleuchtungslicht kann über einen in das Mikroskopgehäuse einschiebbaren Adapter eingekoppelt werden.

Aus der US 2004/0001253 A1 ist ein Mikroskop mit einem optischen Beleuchtungssystem, das ein einfaches Umschalten zwischen evaneszenter Beleuchtung und Reflektionsbeleuchtung ermöglicht. Das Beleuchtungssystem beinhaltet eine Laserlichtquelle, deren Licht in eine optische Faser eingekoppelt wird. Ferner ist eine Auskoppeloptik vorgesehen, die das aus der Faser austretende Licht in einen hinteren Brennpunkt des Mikroskopobjektivs fokussiert. Die optische Faser ist in einer Ebene senkrecht zur optischen Achse des Mikroskopobjektivs verschiebbar.

Aus der DE 102 29 935 A1 ist eine Einrichtung zur Einkopplung von Licht in einem Mikroskop bekannt. Dort wird in der Leuchtfeldblendenebene durch eine als Schieber ausgeführte Lichtleitfaser-Einkopplung Laserlicht auf das Präparat gerichtet. Die Erfindung ist insbesondere für das TIRF-Verfahren geeignet.

Ein weiteres Mikroskop zur TIRM ist aus der US 2004/0174523 A1 bekannt.

In der Rastermikroskopie wird eine Probe mit einem Lichtstrahl beleuchtet, um das von der Probe emittierte Detektionslicht, als Reflexions- oder Fluoreszenzlicht zu beobachten. Der Fokus eines Beleuchtungslichtstrahlenbündels wird mit Hilfe einer steuerbaren Strahlablenkeinrichtung, im Allgemeinen durch Verkippen zweier Spiegel, in einer Probenebene bewegt, wobei die Ablenkachsen meist senkrecht aufeinander stehen, so dass ein Spiegel in x-, der andere in y-Richtung ablenkt. Die Verkippung der Spiegel wird beispielsweise mit Hilfe von Galvanometer-Stellelementen bewerkstelligt. Die Leistung des vom Objekt kommenden Detektionslichtes wird in Abhängigkeit von der Position des Abtaststrahles gemessen. Üblicherweise werden die Stellelemente mit Sensoren zur Ermittlung der aktuellen Spiegelstellung ausgerüstet. Speziell in der konfokalen Rastermikroskopie wird ein Objekt mit dem Fokus eines Lichtstrahls in drei Dimensionen abgetastet.

Ein konfokales Rastermikroskop umfasst im Allgemeinen eine Lichtquelle, eine Fokussieroptik, mit der das Licht der Quelle auf eine Lochblende - die sog. Anregungsblende - fokussiert wird, einen Strahlteiler, eine Strahlablenkeinrichtung zur Strahlsteuerung, eine Mikroskopoptik, eine Detektionsblende und die Detektoren zum Nachweis des Detektions- bzw. Fluoreszenzlichtes. Das Beleuchtungslicht wird über einen Strahlteiler eingekoppelt. Das vom Objekt kommende Fluoreszenz- oder Reflexionslicht gelangt über die Strahlablenkeirlhchtung zurück zum Strahlteiler, passiert diesen, um anschließend auf die Detektionsblende fokussiert zu werden, hinter der sich die Detektoren befinden. Diese Detektionsanordnung wird Descan-Anordnung genannt. Detektionslicht, das nicht direkt aus der Fokusregion stammt, nimmt einen anderen Lichtweg und passiert die Detektionsblende nicht, so dass man eine Punktinformation erhält, die durch sequentielles Abtasten des Objekts mit dem Fokus des Beleuchtungslichtstrahlenbündels zu einem dreidimensionalen Bild führt. Meist wird ein dreidimensionales Bild durch schichtweise Bilddatennahme erzielt.

Die aus dem Stand der Technik bekannten Systeme haben den Nachteil, dass teilweise sehr aufwendige und raumfordernde Optiken im Strahlengang des Mikroskops notwendig sind, um das TIRF-Beleuchtungslicht einzukoppeln. Dies beeinflusst insbesondere den Detektionsstrahlengang nachteilig und führt oft zu Verlust an Detektionslichtleistung.

Wie bereits zuvor erwähnt, geht es hier um mikroskopische TIRF-Untersuchungen, wobei eine Probe unter sehr flachem Winkel beleuchtet wird, nämlich zur Erzeugung von Total-Reflexion an der Probenoberfläche. Im Stand der Technik verwendet man dazu Objektive mit sehr großer Apertur, um große Beleuchtungsaperturen zu ermöglichen. Die Fluoreszenz-Anregung erfolgt über eine Laserlichtquelle, wobei der Laser regelmäßig auf einen Punkt am Pupillenrand des Objektivs abgebildet wird. Aus dem Stand der Technik ist es auch bereits bekannt, zur Fluoreszenz-Anregung Gasentladungs-Lampen zu verwenden. In der Aperturebene des Beleuchtungsstrahlengangs wird dabei eine Ringblende eingebracht, so dass nur der Pupillenrand des Objektivs beleuchtet wird.

Bei der bislang realisierten Technik zur TIRF-Mikroskopie ist nachteilig, dass eine äußerst genaue Justage von Umlenkspiegeln, Blenden oder dergleichen erforderlich ist. Zum achromatischen Abbilden der Apertur-Blende in der Objektiv-Pupille sind extrem gut korrigierte Beleuchtungs-Optiken erforderlich. So werden bislang ganz spezielle Mikroskope mit externer Fluoreszenzbeleuchtung und Laseranordnung verwendet.

Der vorliegenden Erfindung liegt die Aufgabe zugrunde, ein einfach ausgeführtes Totalinternes-Reflexions-Mikroskop mit einem Objektiv anzugeben, wobei das Objektiv sich im herkömmlichen Strahlengang des Beleuchtungslichts und des Detektionslichts verwenden lässt.

Das erfindungsgemäße Mikroskop löst die voranstehende Aufgabe durch die Merkmale des Patentanspruchs 1. Danach ist das gattungsbildende Mikroskop dadurch gekennzeichnet, dass in der Nähe oder in der Ebene der Objektivpupille eine Blende vorgesehen ist und dass die Blende einen für das Beleuchtungslicht undurchlässigen sowie für das Detektionslicht durchlässigen mittigen Bereich und einen für das Beleuchtungslicht durchlässigen Randbereich aufweist.

Erfindungsgemäß ist erkannt worden, dass sich eine evaneszente Beleuchtung einer Probe durch das Objektiv hindurch auf konstruktive einfache Weise realisieren lässt, nämlich dadurch, dass man in der Nähe oder in der Ebene der Objektivpupille eine besondere konstruktive Maßnahme vorsieht, nämlich eine besondere Blende. Diese Blende ist derart konstruiert bzw. ausgelegt, dass sie einen für das Beleuchtungslicht undurchlässigen sowie für das Detektionslicht durchlässigen mittigen Bereich und einen für das Beleuchtungslicht durchlässigen Randbereich aufweist. Mit anderen Worten wird das Anregungslicht im mittigen Bereich gesperrt und kann lediglich am Pupillenrand passieren und dann unter einem flachen Winkel in die Probe eindringen. Das von der Probe kommende Detektionslicht, beispielsweise Fluoreszenzlicht, kann über die volle Objektivapertur aufgenommen werden, da nämlich der mittige Bereich für das Detektionslicht durchlässig ist. Der Randbereich kann im einfachsten Falle, d.h. ohne Einschränkung der Beobachtungsapertur, ebenfalls für das Detektionslicht durchlässig sein.

Sofern eine Reduzierung der Beobachtungsapertur gewünscht wird, ist es von Vorteil, wenn der Randbereich für das Detektionslicht, d.h. für das von der Probe kommende Fluoreszenzlicht, undurchlässig ist. Durch diese Maßnahme findet eine Reduzierung der Objektivapertur bzw. Beobachtungsapertur statt. Das von der Probe emittierte Fluoreszenzlicht kann den Randbereich nicht passieren und wird entsprechend im Randbereich gesperrt.

In weiter vorteilhafter Weise, insbesondere zur Erzielung einer symmetrischen Beleuchtungssituation, ist der mittige Bereich der Blende, der das Beleuchtungslicht sperrt, als Kreisfläche ausgebildet. Der Randbereich schließt sich in weiter vorteilhafter Weise unmittelbar um die Kreisfläche an und erstreckt sich um diese herum als Ringfläche. Diese Ringfläche kann entsprechend den voranstehenden Ausführungen für das Detektionslicht durchlässig (volle Objektivapertur) oder undurchlässig (reduzierte Objektivapertur) sein.

Die unterschiedlich durchlässigen Bereiche - mittiger Bereich und Randbereich - der Blende sind erfindungsgemäß als dünne, vorzugsweise auf einen lichtdurchlässigen Träger aufgebrachte Schichten ausgeführt. Diese Schichten können auf den Träger aufgedampft sein. Die Schichten lassen sich durch unterschiedlichste lithografische Prozesse erzeugen.

In weiter vorteilhafter Weise handelt es sich bei den Schichten um Interferenzschichten, wodurch sich eine wellenlängeabhängige Beeinflussung des Lichts ergibt. So kann es sich bei den Schichten um Multiband-Interferenzschichten handeln, so dass mehrere Fluoreszenzanregungen gleichzeitig erfolgen können. Eine solche Auslegung spricht für eine universelle Verwendbarkeit des Objektivs.

Im Konkreten ist es denkbar, dass als Träger der Schichten ganz allgemein eine Glasoberfläche dient. Die Glasoberfläche kann dabei die Oberfläche eines in das Objektiv integrierten Glasplättchens sein. Ebenso ist es denkbar, dass als Träger der Schichten die Oberfläche einer Linse dient, wobei die Linse auf der die Schicht tragenden Seite abgeflacht sein kann. Das Aufbringen der Schichten auf gewölbte Oberflächen ist ebenso denkbar, wodurch sich ein vergleichbarer Effekt erzielen lässt.

Des Weiteren ist es möglich, die Schichten auf der objektabgewandten Seite des Trägers oder aber auch auf der objektzugewandten Seite des Trägers auszubilden, wobei sicherzustellen ist, dass die Schichten nahe der Ebene der Objektpupille angeordnet sind.

Sofern das Mikroskop im Beleuchtungsstrahlengang ein Beleuchtungsfilter bzw. Anregungsfilter umfasst, weist dieser Beleuchtungsfilter die gleiche Beschichtung wie der Randbereich der Blende bzw. des Träger auf. So gelangt durch den Beleuchtungsfilter lediglich das zur Anregung vorgesehene Beleuchtungslicht - entsprechend der Auslegung des Beleuchtungsfilters -, welches im Objektiv den Randbereich zur evaneszenten Beleuchtung der Probe passieren kann. Eine Abstimmung zwischen dem Beleuchtungsfilter und dem Randbereich der Blende ist somit auf einfache Weise realisiert. Der Beleuchtungsfilter ist in vorteilhafter Weise zwischen einer Beleuchtungsblende (Leuchtfeldblende) und gegebenenfalls einer Optik und einem Strahlteiler angeordnet, vorzugsweise im Bereich eines parallel ausgerichteten Beleuchtungslichts.

Des Weiteren ist es von Vorteil, wenn im Detektionsstrahlengang vor dem Detektor ein Detektionsfilter angeordnet ist. Dorthin gelangt durch den Strahlteiler hindurch das von der Probe zurückkehrende Emissionslicht, welches im Objektiv den mittleren Bereich der Blende passieren konnte. In diesem Fall weist der Detektionsfilter die gleiche Beschichtung wie der mittige Bereich der Blende bzw. des Trägers auf, so dass auch insoweit eine Abstimmung stattfindet. Der Detektionsfilter vermeidet u.a., dass unerwünschtes Streulicht zum Detektor gelangt. Die Beobachtungsapertur ist über die Größe der mittigen Fläche sowie über die Größe des Randbereichs, durch den das Detektionslicht nicht hindurchtreten kann, definiert.

Des Weiteren sei angemerkt, dass der Detektionsfilter im Detektionsstrahlengang zwischen dem Strahlteiler und dem Detektor an beliebigen Stellen angeordnet sein kann.

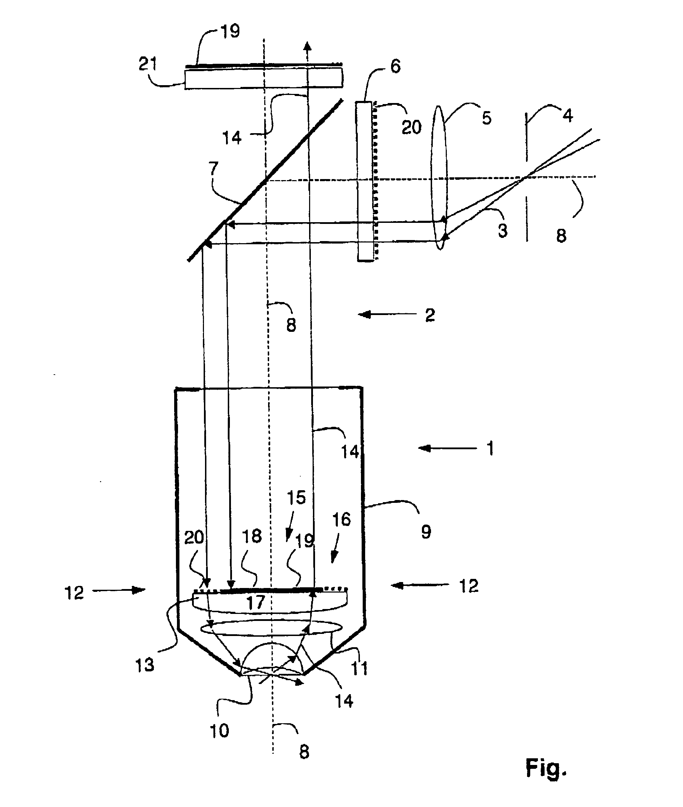

Es gibt nun verschiedene Möglichkeiten, die Lehre der vorliegenden Erfindung in vorteilhafter Weise auszugestalten und weiterzubilden. Dazu ist einerseits auf die den Patentanspruch 1 nachgeordneten Patentansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigt
- Die einzige Fig.: in einer schematischen Ansicht ein Ausführungsbeispiel eines erfindungsgemäßen Objektivs im Strahlengang eines ebenfalls erfindungsgemäßen Mikroskops.

Die einzige Figur zeigt ein Ausführungsbeispiel eines erfindungsgemäßen Objektivs 1 im Strahlengang 2 eines ebenfalls erfindungsgemäßen Mikroskops, wobei hier lediglich einzelne Bestandteile des Mikroskops gezeigt sind.

Beleuchtungslicht 3 kommt von einer in der Figur nicht gezeigten Laserlichtquelle und gelangt über einen Beleuchtungsblende 4 durch eine das Licht parallelisierende Optik 5 und durch ein Beleuchtungsfilter 6 hindurch zu einem Strahlteiler 7.

Über den Strahlteiler 7 wird das Beleuchtungslicht 3 entlang der optischen Achse 8 durch das Objektiv 1 gelenkt.

Das Objektiv 1 ist vereinfacht dargestellt und umfasst neben dem Objektivgehäuse 9 eine angedeutete Frontlinse 10 sowie eine weitere Linse 11.

Die Ebene der Objektivpupille ist durch die mit Bezugszeichen 12 gekennzeichneten Pfeile angegeben. Bei dem hier gewählten Ausführungsbeispiel ist in der Ebene der Objektivpupille eine Blende 13 vorgesehen, wobei die Blende 13 einen für das Beleuchtungslicht 3 undurchlässigen sowie für das Detektionslicht 14 durchlässigen mittigen Bereich 15 und einen für das Beleuchtungslicht 3 durchlässigen Randbereich 16 aufweist.

Das von der in der Figur nicht gezeigten Probe emittierte Fluoreszenzlicht gelangt entlang der optischen Achse 8 durch die Frontlinse 10 und die weitere Linse 11 durch einen Glaskörper 17 hindurch, der mit seiner flachen Oberfläche 18 als Träger für aufgedampfte Schichten 19, 20 dient. Diese Schichten 19, 20 bilden letztendlich die Blende 13, wobei das emittierte Licht, d.h. das Detektionslicht 14, durch den mittigen Bereich 15 und durch die dort aufgedampfte Schicht 19 hindurch aus dem Objektiv 1 heraus zum Strahlteiler 7 und durch diesen hindurch einen Detektionsfilter 21 passieren kann. Von dort aus gelangt das Detektionslicht 14 zu dem in der Figur nicht gezeigten Detektor.

Des Weiteren ist in der einzigen Figur erkennbar, dass sowohl der Beleuchtungsfilter 6 als auch der Detektionsfilter 21 beschichtet sind, nämlich mit den gleichen Schichten, wie sie auf den Glaskörper 17 im Objektiv 1 aufgedampft sind. So trägt der Beleuchtungsfilter 6 die gleiche aufgedampfte Schicht 20, wie sie im Randbereich 16 des Glaskörpers 17 aufgedampft ist.

Der Detektionsfilter 21 trägt die gleiche aufgedampfte Schicht 19, wie sie im mittigen Bereich 15 des Glaskörpers 17 aufgedampft ist. Im Hinblick auf weitere Merkmale und Vorteilsangaben, die sich der einzigen Figur nicht entnehmen lassen, sei zur Vermeidung von Wiederholungen auf den allgemeinen Teil der Beschreibung verwiesen.

Abschließend sei ganz besonders darauf hingewiesen, dass das voranstehende erörterte Ausführungsbeispiel lediglich zur Beschreibung der beanspruchten Lehre dient, diese jedoch nicht auf die Ausführungsbeispiel einschränkt.

## Patentansprüche

1. Mikroskop, umfassend
eine Lichtquelle zur evaneszenten Beleuchtung einer Probe,
ein Objektiv (1), wobei sowohl Beleuchtungslicht (3) als auch Detektionslicht (14) durch das Objektiv (1) geführt werden und wobei das Beleuchtungslicht (3) in der Ebene der Objektivpupille einen Fokus aufweist, sowie
eine in der Nähe oder in der Ebene der Objektivpupille vorgesehene Blende (13), wobei die Blende (13) einen für das Beleuchtungslicht (3) undurchlässigen sowie für das Fluoreszenz (Detektionslicht (14) durchlässigen mittigen Bereich (15) und einen für das Beleuchtungslicht (3) durchlässigen Randbereich (16) aufweist,
**dadurch gekennzeichnet, dass** die unterschiedlich durchlässigen Bereiche (15, 16) der Blende (13) als dünne Schichten (19, 20) ausgeführt sind und dass im Beleuchtungsstrahlengang (3) ein Beleuchtungsfilter (6) und/oder im Detektionsstrahlengang ein Detektionsfilter (21) angeordnet ist, wobei der Beleuchtungsfilter (6) die gleiche Beschichtung wie der Randbereich (16) der Blende (13) und der Detektionsfilter (21) die gleiche Beschichtung wie der mittige Bereich (15) der Blende (13) aufweist.

2. Mikroskop nach Anspruch 1, **dadurch gekennzeichnet, dass** der Randbereich (16) der Blende (13) für das Detektionslicht (14) undurchlässig ist.

3. Mikroskop nach Anspruch 1 oder 2, **dadurch gekennzeichnet, dass** der mittige Bereich (15) der Blende (13) als Kreisfläche ausgebildet ist, wobei der Randbereich (16) als sich unmittelbar um die Kreisfläche erstreckende Ringfläche ausgebildet sein kann.

4. Mikroskop nach einem der Ansprüche 1 bis 3, **dadurch gekennzeichnet, dass** die Schichten (19, 20) auf einen lichtdurchlässigen Träger (17) aufgebracht sind, wobei die Schichten (19, 20) auf den Träger (17) aufgedampft sein können.

5. Mikroskop nach einem der Ansprüche 1 bis 4, **dadurch gekennzeichnet, dass** es sich bei den Schichten (19, 20) um interferenzschichten, vorzugsweise um Multiband-Interferenzschichten, handelt.

6. Mikroskop nach einem der Ansprüche 1 bis 5, **dadurch gekennzeichnet, dass** als Träger (17) der Schichten (19, 20) eine Glasoberfläche dient, wobei als Träger (17) der Schichten (19, 20) die Oberfläche eines Glasplättchens oder als Träger (17) der Schichten (19, 20) die Oberfläche einer Linse dienen kann.

7. Mikroskop nach einem der Ansprüche 1 bis 6, **dadurch gekennzeichnet, dass** der Träger (17) auf der die Schichten (19, 20) tragenden Seite flach ausgebildet ist.

8. Mikroskop nach einem der Ansprüche 1 bis 7, **dadurch gekennzeichnet, dass** die Schichten (19, 20) auf der objektabgewandten Seite des Trägers (17) ausgebildet sind und/oder dass die Schichten (19, 20) auf der objektzugewandten Seite des Trägers (17) ausgebildet sind.

9. Mikroskop nach einem der Ansprüche 1 bis 8, **dadurch gekennzeichnet, dass** der Beleuchtungsfilter (6) zwischen einer Beleuchtungsblende (4) und ggf. einer Optik (5) und einem Strahlteiler (7), vorzugsweise im Bereich eines parallelen Beleuchtungslichts (3), angeordnet ist.

10. Mikroskop nach einem der Ansprüche 1 bis 9, **dadurch gekennzeichnet, dass** der Detektionsfilter (21) zwischen dem Strahlteiler (7) und einem Detektor angeordnet ist.

## Claims

1. Microscope, comprising
a light source for the evanescent illumination of a sample, an objective (1), wherein both illuminating light (3) and
detection light (14) are passed through the objective (1), and wherein the illuminating light (3) has a focus in the plane of the objective pupil, and
an aperture (13) is provided in the vicinity or in the plane of the objective pupil, wherein the aperture (13) has a central region (15) which is opaque to the illuminating light (3) and transparent to the fluorescence detection light (14) and an edge region (16) which is transparent to the illuminating light (3),
**characterised in that** the different transparent regions (15, 16) of the aperture (13) are in the form of thin layers (19, 20), and that an illuminating filter (6) is disposed in the illuminating beam path (3) and/or a detection filter (21) is disposed in the detection beam path, wherein the illuminating filter (6) has the same coating as the edge region (16) of the aperture (13) and the detection filter (21) has the same coating as the central region (15) of the aperture (13).

2. Microscope according to Claim 1, **characterised in that** the edge region (16) of the aperture (13) is opaque to the detection light (14).

3. Microscope according to Claim 1 or 2, **characterised in that** the central region (15) of the aperture (13) is formed as a circular area, wherein the edge region (16) can be formed as a ring area extending directly around the circular area.

4. Microscope according to any one of Claims 1 to 3,
**characterised in that** the layers (19, 20) are applied to a transparent carrier (17), wherein the layers (19, 20) can be vapour-deposited on the carrier (17).

5. Microscope according to any one of Claims 1 to 4,
**characterised in that** the layers (19, 20) are interference layers, preferably multiband interference layers.

6. Microscope according to any one of Claims 1 to 5,
**characterised in that** a glass surface serves as the carrier (17) of the layers (19, 20), wherein the surface of a small glass plate can serve as the carrier (17) of the layers (19, 20) or the surface of a lens can serve as the carrier (17) of the layers (19, 20).

7. Microscope according to any one of Claims 1 to 6,
**characterised in that** the carrier (17) is flat on the side which bears the layers (19, 20).

8. Microscope according to any one of Claims 1 to 7,
**characterised in that** the layers (19, 20) are formed on the side of the carrier (17) which is remote from the object, and/or that the layers (19, 20) are formed on the side of the carrier (17) which faces the object.

9. Microscope according to any one of Claims 1 to 8,
**characterised in that** the illuminating filter (6) is disposed between an illuminating aperture (4), and optionally a lens system (5), and a beam splitter (7), preferably in the region of a parallel illuminating light (3).

10. Microscope according to any one of Claims 1 to 9,
**characterised in that** the detection filter (21) is disposed between the beam splitter (7) and a detector.

## Revendications

1. Microscope, comprenant
une source lumineuse pour l'éclairage évanescent d'un échantillon,
un objectif (1), aussi bien de la lumière d'éclairage (3) qu'également de la lumière de détection (14) étant guidées à travers l'objectif (1) et la lumière d'éclairage (3) présentant un foyer dans le plan de la pupille de l'objectif, ainsi
qu'un diaphragme (13) disposé au voisinage ou dans le plan de la pupille de l'objectif, le diaphragme (13) présentant une zone (15) centrale opaque pour la lumière d'éclairage ainsi que transparente pour la lumière de détection de fluorescence (14) et une zone de bord (16) transparente pour la lumière d'éclairage (3),
**caractérisé par le fait que** les zones (15, 16) de transparences différentes du diaphragme (13) sont réalisées sous la forme de couches minces (19, 20) et qu'un filtre d'éclairage (6) est disposé dans la marche des rayons d'éclairage (3) et/ou un filtre de détection (21) dans la marche des rayons de détection, le filtre d'éclairage (6) présentant la même enduction que la zone (16) de bord du diaphragme (13) et le filtre de détection (21) la même enduction que la zone (15) centrale du diaphragme (13).

2. Microscope selon la revendication 1, **caractérisé par le fait que** la zone (16) de bord du diaphragme (13) est opaque pour la lumière de détection (14).

3. Microscope selon la revendication 1 ou 2, **caractérisé par le fait que** la zone (15) centrale du diaphragme (13) est réalisée sous la forme d'une surface circulaire, la zone (16) de bord pouvant être réalisée sous la forme d'une surface annulaire s'étendant directement autour de la surface circulaire.

4. Microscope selon l'une des revendications 1 à 3, **caractérisé par le fait que** les couches (19, 20) sont déposées sur un support (17) transparent à la lumière, les couches (19, 20) pouvant être métallisées sous vide sur le support (17).

5. Microscope selon l'une des revendications 1 à 4, **caractérisé par le fait qu'**il s'agit pour les couches (19, 20) de couches d'interférence, de préférence de couches d'interférence à bandes multiples.

6. Microscope selon l'une des revendications 1 à 5, **caractérisé par le fait qu'**une surface de verre sert de support (17) des couches (19, 20), la surface d'une plaquette de verre pouvant servir en tant que support (17) des couches (19, 20) ou la surface d'une lentille en tant que support (17) des couches (19, 20).

7. Microscope selon l'une des revendications 1 à 6, **caractérisé par le fait que** le support (17) est réalisé plan sur la face portant les couches (19, 20).

8. Microscope selon l'une des revendications 1 à 7, **caractérisé par le fait que** les couches (19, 20) sont formées sur la face du support (17) écartée de l'objet et/ou que les couches (19, 20) sont formées sur la face du support (17) tournée vers l'objet.

9. Microscope selon l'une des revendications 1 à 8, **caractérisé par le fait que** le filtre d'éclairage (6) est disposé entre le diaphragme d'éclairage (4) et le cas échéant une optique (5) et une lame séparatrice (7), de préférence dans la zone d'une lumière d'éclairage (3) parallèle.

10. Microscope selon l'une des revendications 1 à 9, **caractérisé par le fait que** le filtre de détection (21) est disposé entre la lame séparatrice (7) et un détecteur.
